# EUROPÄISCHE PATENTSCHRIFT

(11) **EP 3 169 558 B1**
(45) Veröffentlichungstag und Bekanntmachung des Hinweises auf die Patenterteilung: **01.05.2019**
(21) Anmeldenummer: 15745413.3
(22) Anmeldetag: 14.07.2015
(51) Int. Cl.: B60R 25/40, B60R 16/03, B60L 1/00, G06F 1/32, H01H 83/00

(54) **FAHRZEUG-INFOTAINMENTSYSTEM**
INFOTAINMENT SYSTEM FOR A VEHICLE
SYSTÈME D'INFOLOISIR DE VÉHICULE

(30) Priorität: 17.07.2014 DE 102014213922
(43) Veröffentlichungstag der Anmeldung: 24.05.2017
(73) Patentinhaber: Continental Automotive GmbH, 30165 Hannover (DE)
(72) Erfinder: BRAUN, Holger, 35428 Langgöns (DE); WEBER, Wolfgang, 35435 Wettenberg (DE)
(86) Internationale Anmeldenummer: PCT/EP2015/066048
(87) Internationale Veröffentlichungsnummer: WO 2016/008877

(56) Entgegenhaltungen:
- EP-A1- 1 496 435
- WO-A1-2012/097775
- JP-A- H02 250 124
- US-A1- 2007 276 939
- Jin Wook Lee ET AL: "The performance of a watchdog protocol for wireless network security", International Journal of Wireless and Mobile Computing, 28 May 2007 (2007-05-28), pages 28-36, XP055471035, DOI: 10.1504/IJWMC.2007.013793 Retrieved from the Internet: URL:https://www.beningo.com/wp-content/upl oads/images/Papers/WatchdogArchitectureRev iew.pdf
- Donald W Corson: "Windowed-watchdog timers enhance system security", EDN ELECTRICAL DESIGN NEWS.(TEXAS INSTRUMENT), vol. 50, no. 14, 7 July 2005 (2005-07-07), page 79, XP055471107, US ISSN: 0012-7515

## Beschreibung

Die vorliegende Erfindung betrifft die Verlängerung von Batterielaufzeiten von Fahrzeugen mit einem Fahrzeug-Infotainmentsystem. Insbesondere betrifft die vorliegende Erfindung ein Fahrzeug-Infotainmentsystem, ein Kraftfahrzeug sowie ein Verfahren zur Vermeidung einer Batterieentladung.

Moderne Kraftfahrzeuge weisen oft eine Mehrzahl von elektronischen Systemen auf, deren Komplexität im Laufe der Zeit angestiegen ist. Beispielsweise sind heutzutage viele Personenkraftfahrzeuge mit sogenannten Infotainmentsystemen ausgestattet, die unter anderem die Multimediaanlage des Fahrzeugs steuern und oft auch ein Navigationssystem umfassen. Ferner können diese Infotainmentsysteme auch Fahrerassistenzfunktionen erfüllen bzw. mit einem Fahrerassistenzsystem gekoppelt sein.

Das Infotainmentsystem eines Kraftfahrzeugs wird üblicherweise über die Batterie des Kraftfahrzeugs betrieben, an die auch andere, gegebenenfalls essenzielle Komponenten des Kraftfahrzeugs, wie zum Beispiel der Anlasser, angeschlossen sind. Die EP1496435A zeigt ein Fahrzeug-Infotainmentsystem aufweisend ein Ein-Chip-System mit einer Neustart-Überwachungseinrichtung. Die US2007/276939 zeigt eine Neustartüberwachungseinrichtung (Watchdog).

Es ist eine Aufgabe der Erfindung, die Verfügbarkeit und Zuverlässigkeit von Autobatterien in Kraftfahrzeugen zu erhöhen.

Diese Aufgabe wird durch die Gegenstände des Hauptanspruchs und der nebengeordneten Ansprüche gelöst. Weiterbildungen und Ausführungsformen sind den abhängigen Ansprüchen, der nachfolgenden Beschreibung und den Figuren zu entnehmen.

Ein erster Aspekt der Erfindung betrifft ein Fahrzeug-Infotainmentsystem nach Anspruch 1, welches ein Ein-Chip-System mit einer Neustart-Überwachungseinrichtung umfasst. Dabei ist die Neustart-Überwachungseinrichtung dazu ausgeführt, eine Anzahl von ggf. unerwarteten Neustarts des Ein-Chip-Systems zu bestimmen. Ferner ist die Neustart-Überwachungseinrichtung dazu ausgeführt, das Ein-Chip-System zu deaktivieren oder in einen Ruhemodus zu versetzen, wenn die Anzahl der (unerwarteten) Neustarts des Ein-Chip-Systems einen vorgegebenen Schwellwert überschreitet.

Mit anderen Worten kann ein Kerngedanke der Erfindung darin gesehen werden, dass in einem Ein-Chip-System eines Fahrzeug-Infotainmentsystems eine Neustart-Überwachungseinrichtung integriert wird, die überprüft, ob sich das Ein-Chip-System in einer zyklischen Reset-Schleife befindet. Wenn eine solche zyklische Reset-Schleife des Ein-Chip-Systems detektiert wird, kann die Neustart-Überwachungseinrichtung dazu ausgeführt sein, das Ein-Chip-System zu deaktivieren oder in einen Ruhemodus zu versetzen, um zu verhindern, dass das Ein-Chip-System beim Ausführen dieser Reset-Schleife ständig Strom verbraucht. Die Neustart-Überwachungseinrichtung kann dabei als Reset-Counter ausgeführt sein, der das Ein-Chip-System deaktiviert oder in den Ruhemodus versetzt, wenn der die Anzahl an ausgeführten Reset-Schleifen einen vorgegebenen Schwellwert überschreitet. Auf diese Weise kann sichergestellt werden, dass die Batterie des Kraftfahrzeuges nicht durch einen fehlerhaften Zyklus von Neustarts des Ein-Chip-Systems entladen wird. Das heißt, dass auf diese Weise die Batterie des Kraftfahrzeugs vor Entladung geschützt wird und dass daher auch die Verfügbarkeit und Zuverlässigkeit der Batterie erhöht wird.

Der Erfindung liegt unter anderem die Erkenntnis zugrunde, dass Ein-Chip-Systeme von Fahrzeug-Infotainmentsystemen einen komplexen Aufstartvorgang aufweisen können, was unter anderem durch die im Fahrzeug-Infotainmentsystem verbauten Komponenten begründet sein kann. Beispielsweise können Fahrzeug-Infotainmentsysteme heutzutage mit sogenannten NAND-Speichereinheiten ausgerüstet sein, die gegebenenfalls einen komplexen Aufstartvorgang erfordern können. Tritt beispielsweise während dem Aufstartvorgang ein im Aufstartvorgang nicht korrigierbarer Fehler auf, so kann dieser Fehler zu einem unkontrollierten Neustart des Ein-Chip-Systems führen. Dieser Fehler kann beispielsweise durch inkonsistente, persistente Daten in einem Speicher des Ein-Chip-Systems hervorgerufen werden. Der sich daran anschließende Wiederaufstart des Ein-Chip-Systems kann in diesem Fall wieder den gleichen Fehler provozieren, wodurch das System in einer zyklischen Schleife von Neustarts endet, die wiederum zu einer Batterieentladung führen kann. Um im Falle einer solchen zyklischen Schleife von Neustarts eine Batterieentladung zu verhindern, kann gemäß der vorliegenden Erfindung eine Neustart-Überwachungseinrichtung in dem Ein-Chip-System des Fahrzeug-Infotainmentsystems integriert sein.

Im Kontext der vorliegenden Erfindung kann unter einem Fahrzeug-Infotainmentsystem verstanden werden, dass dieses verschiedene Funktionen wie beispielsweise ein Autoradio bzw. ein Multimediasystem, ein Navigationssystem, eine Freisprecheinrichtung sowie Fahrerassistenzsysteme umfasst. Ferner kann das Fahrzeug-Infotainmentsystem auch eine Benutzerbedieneinheit aufweisen, über welche die Fahrzeuginsassen das System bedienen und steuern können. Unter einem Ein-Chip-System kann im Rahmen dieser Anmeldung ein sogenanntes System on a Chip (SoC) verstanden werden. Dabei kann das Ein-Chip-System einen integrierten Schaltkreis auf einem Halbleitersubstrat bezeichnen, in welchem alle oder ein großer Teil der Funktionen eines Systems, in diesem Fall des Fahrzeug-Infotainmentsystems, integriert sind. Diese Integration ist dem Fachmann auch unter dem Begriff der monolithischen Integration bekannt. Beispielsweise kann das Ein-Chip-System einen oder mehrere Busse, einen Taktgeber, einen Prozessor, einen Speicher sowie Grafikkomponenten, Audiokomponenten und Schnittstellen umfassen. Ferner kann das Ein-Chip-System auch eine Aufstart-Speichereinheit bzw. ein Boot-ROM aufweisen, in der für den Aufstartvorgang zuständige Programmelemente gespeichert sind.

Ein Neustart kann dem Fachmann auch unter dem Begriff des Resets bekannt sein. Ferner kann der Neustart des Ein-Chip-Systems einen sogenannten Boot-Vorgang des Ein-Chip-Systems umfassen, der das Hochfahren des Ein-Chip-Systems bezeichnet und bei welchem die Programme des Ein-Chip-Systems gestartet werden. Unter der Anzahl von Neustarts kann mit anderen Worten ein kumulativer Wert verstanden werden, der angibt, wie oft das Ein-Chip-System gestartet bzw. gereseted wurde. Unter dem Deaktivieren des Ein-Chip-Systems kann verstanden werden, dass das Ein-Chip-System ausgeschaltet wird. Beispielsweise kann die Neustart-Überwachungseinrichtung dazu ausgeführt sein, das Ein-Chip-System von der Stromversorgung bzw. Batterie zu trennen. Unter dem Ruhemodus, in den das Ein-Chip-System versetzt wird, wenn die Anzahl von Neustarts den vorgegebenen Schwellwert überschreitet, kann im Kontext der Erfindung ein sogenannter Standby-Modus verstanden werden. Beide Möglichkeiten, das Deaktivieren des Ein-Chip-Systems sowie das Versetzten in den Ruhemodus, führen dazu, dass das Ein-Chip-System nicht weiter Strom verbraucht und daher eine Entladung der Batterie vermieden wird. Der vorgegebene Schwellwert kann beispielsweise in einer Konfigurationsdatei gespeichert sein, die in einer Speichereinheit des Ein-Chip-Systems gespeichert ist. Ferner kann der vorgegebene Schwellwert auch durch den Benutzer konfigurierbar sein. Beispielsweise kann der vorgegebene Schwellwert durch den Benutzer an die effektive Aufstartzeit des Ein-Chip-Systems angepasst werden.

Gemäß einer beispielhaften Ausführungsform der Erfindung ist die Anzahl von Neustarts eine Anzahl von Neustarts pro Zeiteinheit.

Mit anderen Worten ist die Neustart-Überwachungseinrichtung dazu ausgeführt, eine Anzahl von Neustarts pro Zeiteinheit des Ein-Chip-Systems zu bestimmen und das Ein-Chip-System zu deaktivieren oder in einen Ruhemodus zu versetzen, wenn die Anzahl von Neustarts pro Zeiteinheit des Ein-Chip-Systems einen vorgegebenen Schwellwert überschreitet. Beispielsweise kann in diesem Fall der vorgegebene Schwellwert dreißig Neustarts pro Minute betragen.

Auf diese Weise kann die Neustart-Überwachungseinrichtung zuverlässiger bestimmen, ob sich das Ein-Chip-System in einer zyklischen Reset-Schleife befindet oder nicht.

Gemäß einer weiteren beispielhaften Ausführungsform der Erfindung ist die Anzahl an Neustarts eine absolute Anzahl. Ferner ist die Neustart-Überwachungseinrichtung dazu ausgeführt, die Anzahl von Neustarts bei einem erfolgreichen Aufstarten des Ein-Chip-Systems zurückzusetzen.

Mit anderen Worten weist die Neustart-Überwachungseinrichtung einen absoluten Reset-Zähler auf, der von der Neustart-Überwachungseinrichtung aktiv zurückgesetzt wird, nachdem das Ein-Chip-System erfolgreich geladen und gestartet wurde. Das heißt, dass die absolute Anzahl von Neustarts eine Anzahl von Neustarts seit einem bestimmten Zeitpunkt definieren kann. Beispielsweise kann der bestimmte Zeitpunkt der Zeitpunkt des letzten erfolgreichen Aufstartens des Ein-Chip-Systems sein. Dabei kann unter dem Zurücksetzen der Anzahl von Neustarts verstanden werden, dass die Anzahl von Neustarts nach einem erfolgreichen Aufstarten des Ein-Chip-Systems auf den Wert Null gesetzt wird.

Auf diese Weise kann sichergestellt werden, dass lediglich fehlerhafte Neustarts zu einem Deaktivieren bzw. zu einem Versetzen in den Ruhemodus des Ein-Chip-Systems führen.

Gemäß einer weiteren beispielhaften Ausführungsform der Erfindung weist das Ein-Chip-System ferner eine Schnittstelle zum Empfangen eines Aufwecksignals auf. Dabei ist die Neustart-Überwachungseinrichtung dazu ausgeführt, ein Aufwecken des Ein-Chip-Systems bei Empfangen eines Aufwecksignals über die Schnittstelle zu unterbinden, wenn die Anzahl von Neustarts den vorgegebenen Schwellwert überschreitet.

Mit anderen Worten kann die Neustart-Überwachungseinrichtung dazu ausgeführt sein, die Aufweckfunktion von permanent anliegenden Aufweckquellen zu unterbinden. Beispielsweise kann die Schnittstelle als CAN-Bus ausgeführt sein. In diesem Fall kann die Neustart-Überwachungseinrichtung dazu ausgeführt sein, sogenannte Wake-up-Trigger, die über den CAN-Bus empfangen werden, zu unterbinden.

Gemäß einer weiteren beispielhaften Ausführungsform der Erfindung weist das Ein-Chip-System ferner eine Aufstart-Speichereinheit auf, in welcher ein für einen Aufstartvorgang des Ein-Chip-Systems ausgeführter Programmcode gespeichert ist. Ferner umfasst das Ein-Chip-System eine semi-permanente Speichereinheit. Die Neustart-Überwachungseinrichtung ist ferner in der Aufstart-Speichereinheit implementiert. Außerdem ist die Neustart-Überwachungseinrichtung dazu ausgeführt, die bestimmte Anzahl von Neustarts in der semi-permanenten Speichereinheit abzuspeichern.

Mit anderen Worten kann unter der Aufstart-Speichereinheit ein sogenanntes Boot-ROM des Ein-Chip-Systems, welches im Ein-Chip-System integriert ist, verstanden werden. Entsprechend kann unter dem Programmcode, der in der Aufstart-Speichereinheit gespeichert ist, ein sogenannter Bootloader verstanden werden. Der Bootloader ist die Implementierung des "komplexen" und damit zu überwachenden, potentiell fehleranfälligen Bootvorgangs und befindet sich nicht im Boot-ROM. Kernaufgabe des Boot-ROMs ist es, den Bootloader auf den möglichen Speichermedien (z. B. SD Karte, USB Stick internes NAND Flash, ...) zu finden, ins RAM zu laden, die Authentizität (Signatur) zu prüfen und den Code anzuspringen. Neben dieser Kernaufgabe übernimmt das Boot-ROM, wie schon beschrieben, die Aufgabe der Neustart Überwachung.

Die semi-permanente Speichereinheit kann eine in das Ein-Chip-System integrierte Speichereinheit bezeichnen, die schreibbar und Reset-sicher ist. Das heißt, dass beim Neustarten des Ein-Chip-Systems die Daten der semi-permanenten Speichereinheit nicht gelöscht werden. Beispielsweise kann die semi-permanente Speichereinheit ein EPROM sein. Unter dem Merkmal, dass die Neustart-Überwachungseinrichtung in der Aufstart-Speichereinheit implementiert ist, kann verstanden werden, dass die Neustart-Überwachungseinrichtung ein Teil des unveränderbaren Boot-ROM Codes ist.

Gemäß einer weiteren beispielhaften Ausführungsform der Erfindung weist das Ein-Chip-System ferner eine Mehrzahl von Rechenkernen auf, die einen ersten Anteil der Rechenkerne und einen zweiten Anteil der Rechenkerne umfasst. Dabei ist die Mehrzahl der Rechenkerne mittels einer Stromversorgung betreibbar. Ferner ist der zweite Anteil der Rechenkerne dazu ausgeführt, eine zyklische Fehlfunktion des ersten Anteils der Rechenkerne zu erkennen und bei Erkennen einer solchen zyklischen Fehlfunktion des ersten Anteils der Rechenkerne die Stromversorgung des ersten Anteils der Rechenkerne zur Vermeidung einer Batterieentladung des Kraftfahrzeuges zu trennen.

Auf diese Weise kann die Überwachung des Ein-Chip-Systems auf die Vermeidung einer Batterieentladung bei zyklischen Fehlfunktionen während des Betriebs des Ein-Chip-Systems erweitert werden.

Gemäß einer weiteren beispielhaften Ausführungsform der Erfindung weist das Ein-Chip-System ferner eine als NAND-Speicher ausgeführte Speichereinheit auf.

Auf diese Weise kann das Fahrzeug-Infotainmentsystem kostengünstiger hergestellt werden.

Ein weiterer Aspekt der Erfindung betrifft ein Kraftfahrzeug mit einem Fahrzeug-Infotainmentsystem, welches im Kontext der vorliegenden Erfindung beschrieben ist.

Im Kontext der vorliegenden Erfindung kann dabei unter einem Kraftfahrzeug beispielsweise ein Personenkraftfahrzeug oder ein Lastkraftfahrzeug verstanden werden. Vorteile und Merkmale, die das Fahrzeug-Infotainmentsystem betreffen, können dabei auch das Kraftfahrzeug mit einem Fahrzeug-Infotainmentsystem charakterisieren.

Ein weiterer Aspekt der Erfindung betrifft ein Verfahren nach Anspruch 9 zur Vermeidung einer Reset-Schleife in einem Fahrzeug-Infotainmentsystem mit einem Ein-Chip-System. Dabei umfasst das Verfahren den Schritt des Bestimmens einer Anzahl von Neustarts des Ein-Chip-Systems durch eine Neustart-Überwachungseinrichtung des Ein-Chip-Systems. Ferner weist das Verfahren den Schritt des Deaktivierens oder in einen Ruhemodus Versetzens des Ein-Chip-Systems durch die Neustart-Überwachungseinrichtung auf, wenn die bestimmte Anzahl von Neustarts einen vorgegebenen Schwellwert überschreitet.

Dabei kann das Verfahren durch eine im Kontext der Erfindung beschriebene Neustart-Überwachungseinrichtung eines Ein-Chip-Systems eines Fahrzeug-Infotainmentsystems durchgeführt werden. Daher können Merkmale und Vorteile, die das Fahrzeug-Infotainmentsystem betreffen, auch das Verfahren charakterisieren. Ferner können die Schritte des Verfahrens in der angegebenen Reihenfolge, in einer anderen Reihenfolge oder parallel zueinander durchgeführt werden.

Weitere Merkmale, Vorteile und Anwendungsmöglichkeiten der Erfindung ergeben sich aus der nachfolgenden Beschreibung der Ausführungsbeispiele und Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen.
- Fig. 1: zeigt ein Fahrzeug-Infotainmentsystem gemäß einem Ausführungsbeispiel der Erfindung.
- Fig. 2: zeigt ein Kraftfahrzeug mit einem Fahrzeug-Infotainmentsystem gemäß einem Ausführungsbeispiel der Erfindung.
- Fig. 3: zeigt ein Flussdiagramm für ein Verfahren gemäß einem Ausführungsbeispiel der Erfindung.
- Fig. 4: zeigt ein Flussdiagramm eines von Boot-ROM und Bootloader durchgeführten Verfahrens gemäß einem Ausführungsbeispiel der Erfindung.

Dabei sind die Figuren schematisch und nicht maßstabsgetreu dargestellt. Sind in der nachfolgenden Beschreibung in verschiedenen Figuren die gleichen Bezugszeichen angegeben, so bezeichnen diese einander entsprechende Elemente. Einander entsprechende Elemente können aber auch mit unterschiedlichen Bezugszeichen bezeichnet sein.

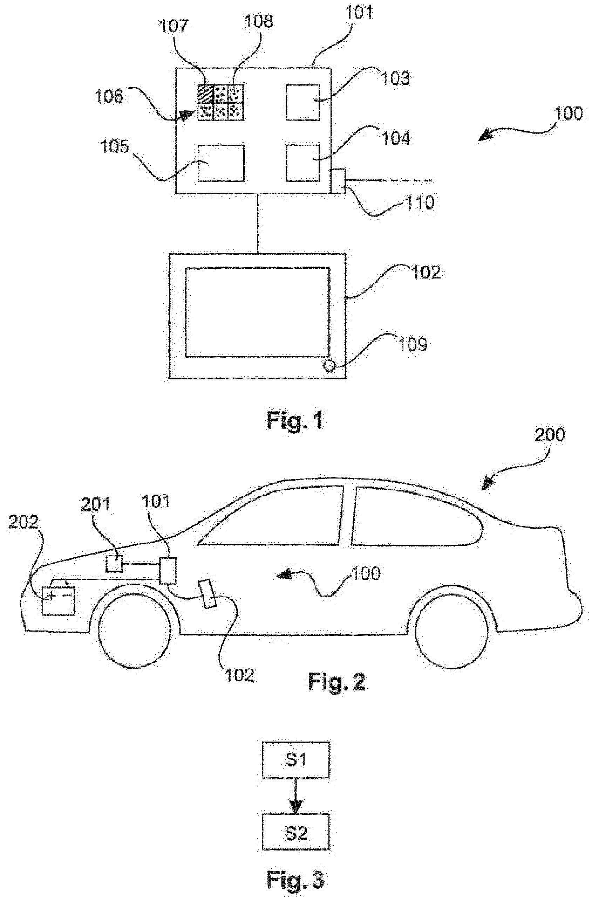

In Fig. 1 ist ein Fahrzeug-Infotainmentsystem 100 gemäß einem Ausführungsbeispiel der Erfindung dargestellt. Das Fahrzeug-Infotainmentsystem 100 umfasst ein Ein-Chip-System (SoC) 101 sowie eine damit verbundene Benutzerbedieneinheit 102. Das Ein-Chip-System 101 beinhaltet eine Neustart-Überwachungseinrichtung 103, die dazu ausgeführt ist, zu überwachen, ob das Ein-Chip-System in einer zyklischen Schleife von Neustarts festsitzt und in diesem Fall das Ein-Chip-System 101 deaktiviert bzw. in einen Ruhemodus versetzt. Dazu ist die Neustart-Überwachungseinrichtung 103 ausgeführt, eine Anzahl von Neustarts des Ein-Chip-Systems 101 zu bestimmen und abhängig von der bestimmten Anzahl von Neustarts des Ein-Chip-Systems 101 das Ein-Chip-System 101 zu deaktivieren bzw. in einen Ruhemodus zu versetzen.

Ferner ist die Neustart-Überwachungseinrichtung 103 dazu ausgeführt, eine Aufweckfunktion des Ein-Chip-Systems 101 zu begrenzen, wenn die Anzahl von Neustarts den vorgegebenen Schwellwert überschreitet. Beispielsweise ist die Neustart-Überwachungseinrichtung 103 dazu ausgeführt, bei Überschreiten des Schwellwerts durch die Anzahl der Neustarts eine über die Schnittstelle 110 des Ein-Chip-Systems ausgelöste Aufweckfunktion zu unterbinden. Beispielsweise handelt es sich bei der Schnittstelle 110 um einen sogenannten CAN-Bus des Kraftfahrzeuges, über welchen das Ein-Chip-System 101 mit anderen Komponenten des Kraftfahrzeuges verbunden ist und Aufwecksignale von den anderen Komponenten empfangen kann. Das Aufwecken des Fahrzeug-Infotainmentsystems 100 über einen Einschaltknopf 109 der Benutzerbedieneinheit 102 ist gemäß diesem Ausführungsbeispiel weiterhin aktiviert. Jedoch kann gemäß anderen Ausführungsbeispielen der Erfindung die Neustart-Überwachungseinrichtung 103 dazu ausgeführt sein, sämtliche Aufweckfunktionen des Ein-Chip-Systems 101 inklusive des Einschaltknopfes 109 zu deaktivieren.

Das Ein-Chip-System 101 umfasst ferner auch eine semi-permanente Speichereinheit 104, in welche die Neustart-Überwachungseinrichtung 103 die bestimmte Anzahl an Neustarts abspeichert. Dabei kann die bestimmte Anzahl an Neustarts eine Anzahl von Neustarts pro Zeiteinheit oder eine absolute Anzahl an Neustarts des Ein-Chip-Systems sein. Ferner umfasst das Ein-Chip-System 101 eine semi-permanente Speichereinheit 104, wobei die Neustart-Überwachungseinrichtung 103 dazu ausgeführt ist, die bestimmte Anzahl an Neustarts in der semi-permanenten Speichereinheit 104 abzuspeichern. Im Falle, dass es sich bei der bestimmten Anzahl von Neustarts des Ein-Chip-Systems 101 um eine absolute Anzahl handelt, ist die Neustart-Überwachungseinrichtung 103 ferner dazu ausgeführt, im Falle eines erfolgreichen Aufstartens des Ein-Chip-Systems den in der semi-permanenten Speichereinheit 104 abgespeicherten Wert, der der Anzahl von Neustarts entspricht, zurückzusetzen bzw. auf Null zu setzen.

Das Ein-Chip-System 101 umfasst außerdem eine Mehrzahl von Rechenkernen 106. Diese Mehrzahl von Rechenkernen 106 umfasst einen ersten Anteil der Rechenkerne 108 sowie einen zweiten Anteil der Rechenkerne 107. Dabei ist der zweite Anteil der Rechenkerne 107 dazu ausgeführt, eine zyklische Fehlfunktion des ersten Anteil der Rechenkerne 108 zu erkennen und bei Erkennen einer zyklischen Fehlfunktion des ersten Anteils der Rechenkerne 108 die Stromversorgung des ersten Anteils der Rechenkerne 108 zur Vermeidung einer Batterieentladung des Kraftfahrzeuges zu trennen.

Außerdem umfasst das Ein-Chip-System 101 eine als NAND-Speicher ausgeführte Speichereinheit 105. Dieser NAND-Speicher kann den Vorteil aufweisen, dass er relativ kostengünstig ist. Jedoch kann der NAND-Speicher 105 einen relativ komplexen Aufstartvorgang erfordern, wodurch das Überprüfen des Aufstartvorganges des Ein-Chip-Systems 101 durch die Neustart-Überwachungseinrichtung 103 besonders vorteilhaft ist.

In Fig. 2 ist ein Kraftfahrzeug 200 mit einem Fahrzeug-Infotainmentsystem 100 gemäß einem Ausführungsbeispiel der Erfindung dargestellt. Das Fahrzeug-Infotainmentsystem 100 ist dabei im Kontext des in Fig. 1 dargestellten Ausführungsbeispiels detaillierter beschrieben. Unter anderem weist das Fahrzeug-Infotainmentsystem 100 ein Ein-Chip-System 101 sowie eine Benutzerbedieneinheit 102 auf. Für die Strom- bzw. Spannungsversorgung ist das Fahrzeug-Infotainmentsystem 100 an eine Batterie 202 des Kraftfahrzeuges 200 angeschlossen. Ferner ist das Fahrzeug-Infotainmentsystem 100 beispielsweise über einen CAN-Bus mit anderen Komponenten 201 des Kraftfahrzeuges verbunden. Beispielsweise kann die Komponente 201 dazu ausgeführt sein, über den CAN-Bus ein Aufwecksignal an das Ein-Chip-System 101 zu senden.

In Fig. 3 ist ein Flussdiagramm für ein Verfahren zur Vermeidung einer Batterieentladung durch ein Fahrzeug-Infotainmentsystem mit einem Ein-Chip-System gemäß einem Ausführungsbeispiel der Erfindung dargestellt. Dabei umfasst das Verfahren den Schritt S1 des Bestimmens einer Anzahl von Neustarts des Ein-Chip-Systems durch eine Neustart-Überwachungseinrichtung des Ein-Chip-Systems. Ferner erfolgt der Schritt S2 des Deaktivierens oder des Versetzens in einen Ruhemodus des Ein-Chip-Systems durch die Neustart-Überwachungseinrichtung, wenn die bestimmte Anzahl von Neustarts einen vorgegebenen Schwellwert überschreitet.

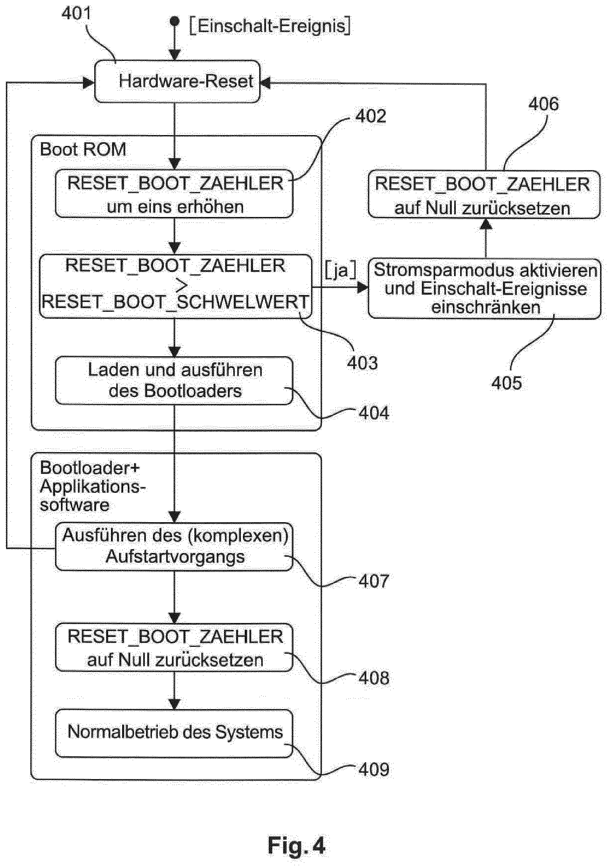

Fig. 4 zeigt ein Flussdiagramm eines von Boot-ROM und Bootloader durchgeführten Verfahrens gemäß einem Ausführungsbeispiel der Erfindung. Nach einem Einschalt-Ereignis kommt es zu einem Hardware-Reset 401. Die folgenden Schritte 402 bis 404 werden vom Boot-ROM durchgeführt.

Der RESET_BOOT_ZAEHLER ist ein Zähler im semi-permanenten Speicher des Ein-Chip-Systems, der seinen Wert auch über Resets hinweg behält.

Der RESET_BOOT_ZAEHLER wird vom BootROM bei jedem Reset Ereignis um eins hochgezählt (siehe Schritt 402). Wird in Schritt 403 festgestellt, dass der RESET_BOOT_ZAEHLER größer als ein vorbestimmter Schwellwert (beispielsweise 30) ist, wird der Stromsparmodus aktiviert und Einschaltereignisse werden in Schritt 405 eigeschränkt. In Schritt 406 wird daraufhin der RESET_BOOT_ZAEHLER auf Null zurückgesetzt. Andernfalls erfolgt ein Laden und Ausführen des Bootloaders in Schritt 404.

Die Applikations-Software (inkl. Bootloader), die auf der Ein-Chip-System Lösung im Rahmen des Aufstartvorgangs gestartet wird, stellt den erfolgreichen Aufstart fest (Schritt 407) und kann daraufhin den RESET_BOOT_ZAEHLER zurück auf Null setzen (Schritt 408), woraufhin das System im Normalbetrieb läuft (Schritt 409).

Falls der Aufstartvorgang nicht erfolgreich verläuft (z. B wegen eines Fehler in der frühen Aufstartphase), wird der Programmcode zum Erkennen eines erfolgreichen Aufstartvorgangs nicht durchlaufen und damit der Zähler auch nicht zurückgesetzt. IN diesem Fall wird der Hardware-Reset 401 erneut durchgeführt.

Während der frühen Aufstartphase, noch bevor jegliche Art von veränderbarem Programmcode durchlaufen wird, vergleicht das Boot-ROM den aktuellen Wert des RESET_BOOT_ZAEHLERS mit einem fest eingestellten, nur einmal zu konfigurierendem Schwellwert RESET_BOOT_SCHWELLWERT (Schritt 403).

Ergänzend sei darauf hinzuweisen, dass "umfassend" oder "aufweisend" keine anderen Elemente ausschließt und "ein" oder "einer" keine Vielzahl ausschließt. Ferner sei darauf hingewiesen, dass Merkmale, die mit Verweis auf eines der obigen Ausführungsbeispiele oder Ausführungsformen beschrieben worden sind, auch in Kombination mit anderen Merkmalen anderer oben beschriebener Ausführungsbeispiele oder Ausführungsformen verwendet werden können. Bezugszeichen in den Ansprüchen sind nicht als Einschränkungen anzusehen.

## Patentansprüche

1. Fahrzeug-Infotainmentsystem (100), aufweisend:
ein Ein-Chip-System (101) mit einer Neustart-Überwachungseinrichtung (103);
wobei die Neustart-Überwachungseinrichtung dazu eingerichtet ist, eine Anzahl von fehlerhaften Neustarts des Ein-Chip-Systems zu bestimmen; und
wobei die Neustart-Überwachungseinrichtung dazu ausgeführt ist, das Ein-Chip-System zu deaktivieren oder in einen Ruhemodus zu versetzen, wenn die Anzahl von fehlerhaften Neustarts des Ein-Chip-Systems einen vorgegebenen Schwellwert überschreitet, wobei die Neustart-Überwachungseinrichtung dazu eingerichtet ist, die Anzahl von Signalquellen, die einen Neustart auslösen können, zu reduzieren, wenn die Anzahl von fehlerhaften Neustarts des Ein-Chip-Systems den vorgegebenen Schwellwert überschreitet, wobei mindestens eine einen Neustart auslösende Signalquelle verfügbar bleibt.

2. Fahrzeug-Infotainmentsystem (100) nach Anspruch 1, wobei die Anzahl von fehlerhaften Neustarts eine Anzahl von fehlerhaften Neustarts pro Zeiteinheit ist.

3. Fahrzeug-Infotainmentsystem (100) nach Anspruch 1, wobei die Anzahl an fehlerhaften Neustarts eine absolute Anzahl ist; und
wobei die Neustart-Überwachungseinrichtung dazu ausgeführt ist, die Anzahl von Neustarts bei einem erfolgreichen Aufstarten des Ein-Chip-Systems zurückzusetzen.

4. Fahrzeug-Infotainmentsystem (100) nach Anspruch 1, das Ein-Chip-System aufweisend:
eine Schnittstelle (110) zum Empfangen eines Aufwecksignals;
wobei die Neustart-Überwachungseinrichtung dazu ausgeführt ist, ein Aufwecken des Ein-Chip-Systems bei Empfangen eines Aufwecksignals über die Schnittstelle (110) zu unterbinden, wenn die Anzahl von Neustarts den vorgegebenen Schwellwert überschreitet.

5. Fahrzeug-Infotainmentsystem (100) nach einem der vorangehenden Ansprüche, das Ein-Chip-System ferner aufweisend:
eine Aufstart-Speichereinheit, in welcher ein für einen Aufstartvorgang des Ein-Chip-Systems ausgeführter Programmcode gespeichert ist;
eine semi-permanente Speichereinheit (104);
wobei die Neustart-Überwachungseinrichtung (103) in dem für den Aufstartvorgang des Ein-Chip-Systems ausgeführten Programmcodeimplementiert ist; und
wobei die Neustart-Überwachungseinrichtung (103) dazu ausgeführt ist, die bestimmte Anzahl von fehlerhaften Neustarts in der semi-permanenten Speichereinheit (104) abzuspeichern.

6. Fahrzeug-Infotainmentsystem (100) nach einem der vorangehenden Ansprüche, das Ein-Chip-System (101) ferner aufweisend:
eine Mehrzahl von Rechenkernen (106) aufweisend einen ersten Anteil der Rechenkerne (108) und einen zweiten Anteil der Rechenkerne (107);
wobei die Mehrzahl der Rechenkerne mittels einer Stromversorgung (202) betreibbar sind;
wobei der zweite Anteil der Rechenkerne (107) dazu ausgeführt ist, eine zyklische Fehlfunktion des ersten Anteils der Rechenkerne (108) zu erkennen und bei Erkennen einer zyklischen Fehlfunktion des ersten Anteils der Rechenkerne (108) die Stromversorgung (202) des ersten Anteils der Rechenkerne zu trennen.

7. Fahrzeug-Infotainmentsystem (100) nach einem der vorangehenden Ansprüche, das Ein-Chip-System ferner aufweisend:
eine als NAND-Speicher ausgeführte Speichereinheit (105).

8. Kraftfahrzeug (200) mit einem Fahrzeug-Infotainmentsystem (100) nach einem der vorangehenden Ansprüche.

9. Verfahren zur Vermeidung einer Reset-Schleife in einem Fahrzeug-Infotainmentsystem mit einem Ein-Chip-System, das Verfahren aufweisend:
Bestimmen einer Anzahl von fehlerhaften Neustarts des Ein-Chip-Systems durch eine Neustart-Überwachungseinrichtung des Ein-Chip-Systems (S1); und
Deaktivieren oder in einen Ruhemodus versetzen des Ein-Chip-Systems durch die Neustart-Überwachungseinrichtung, wenn die bestimmte Anzahl von Neustarts einen vorgegebenen Schwellwert überschreitet (S2), wobei die Neustart-Überwachungseinrichtung dazu eingerichtet ist, die Anzahl von Signalquellen, die einen Neustart auslösen können, zu reduzieren, wenn die Anzahl von fehlerhaften Neustarts des Ein-Chip-Systems den vorgegebenen Schwellwert überschreitet, wobei mindestens eine einen Neustart auslösende Signalquelle verfügbar bleibt.

## Claims

1. Vehicle infotainment system (100) having:
a single-chip system (101) having a restart monitoring device (103);
wherein the restart monitoring device is configured to determine a number of erroneous restarts by the single-chip system; and
wherein the restart monitoring device is designed to deactivate the single-chip system or to transfer it to an idle mode when the number of erroneous restarts by the single-chip system exceeds a prescribed threshold value wherein
the restart monitoring device is configured to reduce the number of signal sources that can trigger a restart when the number of erroneous restarts of the single-chip system exceeds the prescribed threshold value, wherein at least one signal source that triggers a restart remains available.

2. Vehicle infotainment system (100) according to Claim 1, wherein the number of erroneous restarts is a number of erroneous restarts per unit time.

3. Vehicle infotainment system (100) according to Claim 1,
wherein the number of erroneous restarts is an absolute number; and
wherein the restart monitoring device is designed to reset the number of restarts when the single-chip system is successfully started up.

4. Vehicle infotainment system (100) according to Claim 1, the single-chip system having:
an interface (110) for receiving a wakeup signal;
wherein the restart monitoring device is designed to prevent the single-chip system from waking up when a wakeup signal is received via the interface (110) when the number of restarts exceeds the prescribed threshold value.

5. Vehicle infotainment system (100) according to one of the preceding claims, the single-chip system further having:
a startup memory unit that stores a program code executed for a startup process of the single-chip system;
a semipermanent memory unit (104);
wherein the restart monitoring device (103) is implemented in the program code designed for the startup process of the single-chip system; and
wherein the restart monitoring device (103) is designed to store the determined number of erroneous restarts in the semipermanent memory unit (104).

6. Vehicle infotainment system (100) according to one of the preceding claims, the single-chip system (101) further having:
a plurality of computer cores (106) having a first portion of the computer cores (108) and a second portion of the computer cores (107);
wherein the plurality of computer cores are operable by means of a power supply (202);
wherein the second portion of the computer cores (107) is designed to identify a cyclic malfunction in the first portion of the computer cores (108) and, on identification of a cyclic malfunction in the first portion of the computer cores (108), to disconnect the power supply (202) for the first portion of the computer cores.

7. Vehicle infotainment system (100) according to one of the preceding claims, the single-chip system further having:
a memory unit (105) embodied as a NAND memory.

8. Motor vehicle (200) having a vehicle infotainment system (100) according to one of the preceding claims.

9. Method for preventing a reset loop in a vehicle infotainment system having a single-chip system, the method involving:
determination of a number of erroneous restarts by the single-chip system by a restart monitoring device of the single-chip system (S1); and
deactivation, or transfer to an idle mode, of the single-chip system by the restart monitoring device when the determined number of restarts exceeds a prescribed threshold value (S2)
wherein
the restart monitoring device is configured to reduce the number of signal sources that can trigger a restart when the number of erroneous restarts of the single-chip system exceeds the prescribed threshold value, wherein at least one signal source that triggers a restart remains available.

## Revendications

1. Système d'infodivertissement de véhicule (100) comportant :
un système monopuce (101) comprenant un dispositif de surveillance de redémarrage (103) ;
dans lequel le dispositif de surveillance de redémarrage est conçu pour déterminer un nombre de redémarrages infructueux du système monopuce ; et
dans lequel le dispositif de surveillance de redémarrage est conçu pour désactiver ou mettre en mode de veille le système monopuce lorsque le nombre de redémarrages infructueux du système monopuce dépasse une valeur de seuil prédéterminée,
dans lequel le dispositif de surveillance de redémarrage est conçu pour réduire le nombre de sources de signaux pouvant déclencher un redémarrage lorsque le nombre de redémarrages infructueux du système monopuce dépasse la valeur de seuil prédéterminée, dans lequel au moins une source de signal déclenchant un redémarrage reste disponible.

2. Système d'infodivertissement de véhicule (100) selon la revendication 1, dans lequel le nombre de redémarrages infructueux est un nombre de redémarrages infructueux par unité de temps.

3. Système d'infodivertissement de véhicule (100) selon la revendication 1, dans lequel le nombre de redémarrages infructueux est un nombre absolu ; et
dans lequel le dispositif de surveillance de redémarrage est conçu pour réinitialiser le nombre de redémarrages après un démarrage réussi du système monopuce.

4. Système d'infodivertissement de véhicule (100) selon la revendication 1, le système monopuce comportant :
une interface (110) destinée à recevoir un signal d'éveil ;
dans lequel le dispositif de surveillance de redémarrage est conçu pour empêcher un éveil du système monopuce lors de la réception d'un signal d'éveil par l'intermédiaire de l'interface (110) lorsque le nombre de redémarrages dépasse la valeur de seuil prédéterminée.

5. Système d'infodivertissement de véhicule (100) selon l'une quelconque des revendications précédentes, le système monopuce comportant en outre :
une unité de mémoire de démarrage dans laquelle est stocké un code de programme exécuté pour un processus de démarrage du système monopuce ;
une unité de mémoire semi-permanente (104) ;
dans lequel le dispositif de surveillance de redémarrage (103) est mis en oeuvre dans un code de programme exécuté pour le processus de démarrage du système monopuce ; et
dans lequel le dispositif de surveillance de redémarrage (103) est conçu pour stocker le nombre déterminé de redémarrages infructueux dans l'unité de mémoire semi-permanente (104).

6. Système d'infodivertissement de véhicule (100) selon l'une quelconque des revendications précédentes, le système monopuce (101) comportant en outre :
une pluralité de coeurs de calcul (106) comportant une première partie des coeurs de calcul (108) et une seconde partie des coeurs de calcul (107) ;
dans lequel la pluralité de coeurs de calcul peut être mise en fonctionnement au moyen d'une alimentation électrique (202) ;
dans lequel la seconde partie des coeurs de calcul (107) est conçue pour détecter un dysfonctionnement cyclique de la première partie des coeurs de calcul (108) et, lors de la détection d'un dysfonctionnement cyclique de la première partie des coeurs de calcul (108), pour couper l'alimentation électrique (202) de la première partie des coeurs de calcul.

7. Système d'infodivertissement de véhicule (100) selon l'une quelconque des revendications précédentes, le système monopuce comportant en outre :
une unité de mémoire (105) réalisée sous la forme d'une mémoire NAND.

8. Véhicule automobile (200) comportant un système d'infodivertissement de véhicule (100) selon l'une quelconque des revendications précédentes.

9. Procédé pour éviter une boucle de réinitialisation dans un système d'infodivertissement de véhicule comportant un système monopuce, le procédé comprenant :
la détermination d'un nombre de redémarrages défectueux du système monopuce par un dispositif de surveillance de redémarrage du système monopuce (S1) ; et
la désactivation ou la mise en mode de veille du système monopuce par le dispositif de surveillance de redémarrage lorsque le nombre déterminé de redémarrages dépasse une valeur de seuil prédéterminée (S2),
dans lequel le dispositif de surveillance de redémarrage est conçu pour réduire le nombre de sources de signaux pouvant déclencher un redémarrage lorsque le nombre de redémarrages infructueux du système monopuce dépasse la valeur de seuil prédéterminée, dans lequel au moins une source de signal déclenchant un redémarrage reste disponible.
